# EUROPÄISCHE PATENTSCHRIFT

(11) **EP 3 246 592 B1**
(45) Veröffentlichungstag und Bekanntmachung des Hinweises auf die Patenterteilung: **06.11.2019**
(21) Anmeldenummer: 17167355.1
(22) Anmeldetag: 20.04.2017
(51) Int. Cl.: F16F 7/09, D06F 37/22

(54) **SCHALTBARER DÄMPFER**
SWITCHABLE DAMPER
AMORTISSEUR COMMUTABLE

(30) Priorität: 04.05.2016 DE 102016207809
(43) Veröffentlichungstag der Anmeldung: 22.11.2017
(73) Patentinhaber: SUSPA GmbH, 90518 Altdorf (DE)
(72) Erfinder: Bauer, Michael, 92271 Freihung (DE); Pelczer, Andreas, 90518 Altdorf (DE); Ernstberger, Roland, 92242 Hirschau (DE); Weder, Michael, 90455 Nürnberg (DE)
(74) Vertreter: Rau, Schneck & Hübner Patentanwälte Rechtsanwälte PartGmbB

(56) Entgegenhaltungen:
- EP-A1- 2 692 931
- DE-A1-102008 038 133
- KR-A- 20130 037 952
- US-A1- 2006 011 429

## Beschreibung

Die vorliegende Patentanmeldung nimmt die Priorität der deutschen Patentanmeldung DE 10 2016 207 809.7 in Anspruch, deren Inhalt durch Bezugnahme hierin aufgenommen wird.

Die Erfindung betrifft einen schaltbaren Dämpfer.

Dämpfer, insbesondere Reibungsdämpfer, werden heute in zahlreichen Systemen beispielsweise zur Bewegungsdämpfung in Waschmaschinen eingesetzt. Derartige Dämpfer sind bekannt aus EP 2 692 931 A1, KR 2013 0037952 A, DE 10 2008 038 133 A1 und US 2006/011429 A1. Derartige Dämpfer sind bekannt aus EP 2 692 931 A1, KR 2013-0037952 A, DE 10 2008 038 133 A1 und aus US 2006/0011429 A1.

Der Erfindung liegt die Aufgabe zugrunde, einen Dämpfer bereitzustellen, der eine verbesserte Funktionalität aufweist und der insbesondere unkompliziert hergestellt und/oder bedient werden kann.

Die Aufgabe wird durch die Merkmale des Anspruchs 1 gelöst. Der Kern der Erfindung besteht darin, dass ein schaltbarer Dämpfer eine Schalteinheit aufweist, die zwischen einer Blockadeanordnung und einer Freilaufanordnung schaltbar ist. Der schaltbare Dämpfer weist ein Gehäuse mit einer Längsachse, einen entlang der Längsachse verlagerbaren Stößel sowie einen zwischen dem Gehäuse und dem Stößel angeordneten Kolben auf. Der schaltbare Dämpfer weist ferner einen Reibungsbelag auf, der am Kolben angeordnet ist. In der Blockadeanordnung ist der Kolben bezüglich einer Verlagerung entlang der Längsachse blockiert. Mit dem Kolben, an dem der Reibungsbelag angeordnet ist, ist der Reibungsbelag blockiert. Eine Verlagerung des Reibungsbelags relativ zum Gehäuse und/oder zum Stößel ist blockiert. In der Blockadeanordnung ist die Dämpfungsfunktion des schaltbaren Dämpfers aktiviert, also eingeschaltet. Die Freilauffunktion des Dämpfers ist deaktiviert, also ausgeschaltet. Eine Betätigung des Dämpfers, also eine Verlagerung des Stößels gegenüber dem Gehäuse, bewirkt eine Reibungsdämpfung. Der schaltbare Dämpfer ist beispielsweise für die Anwendung in Waschmaschinen geeignet. In die Blockadeanordnung kann vor Erreichen einer kritischen Drehzahl, insbesondere einer Resonanzdrehzahl, der Trommel der Waschmaschine geschaltet werden. Dadurch kann eine übermäßige Bewegung und damit ein Anschlagen der Trommel am Waschmaschinengehäuse verhindert werden. In der Blockadeanordnung weist der schaltbare Dämpfer die Funktion eines Reibungsdämpfers auf. In der Freilaufanordnung ist der Reibungsbelag bezüglich der Verlagerung zum Gehäuse und zum Stößel freigegeben. Die Freilaufanordnung ist insbesondere während eines Schleudervorgangs bei maximaler Drehzahl der Waschmaschine vorteilhaft, um eine dauerhafte Dämpfung zu vermeiden. Bei der maximalen Drehzahl kann eine dauerhafte Dämpfung zu erhöhten Geräuschemissionen und Vibrationen führen. In der Freilaufanordnung hat der schaltbare Dämpfer die Funktion eines Freilaufdämpfers. Aufbau und Funktion eines derartigen Freilaufdämpfers sind beispielsweise bekannt aus EP 1 637 640 B1, worauf hiermit verwiesen wird.

Erfindungsgemäß wurde erkannt, dass der schaltbare Dämpfer zwischen der Reibungsdämpfungsfunktion in der Blockadeanordnung und der Freilauffunktion in der Freilaufanordnung unkompliziert geschaltet werden kann. Insbesondere ist es nicht erforderlich, einen regelbaren Dämpfer bereitzustellen, dessen Dämpfungscharakteristik stufenlos geregelt wird. Der Herstellungsaufwand für einen regelbaren Dämpfer ist groß. Der regelbare Dämpfer ist kostenaufwendig. Der erfindungsgemäße schaltbare Dämpfer ist unkompliziert bezüglich seiner Herstellung und seiner Handhabbarkeit. Der schaltbare Dämpfer ist kosteneffektiv. Der schaltbare Dämpfer ist fehlerunanfällig und robust. Der schaltbare Dämpfer kombiniert in besonders unkomplizierter Weise die Vorteile eines Reibdämpfers mit denen eines Freilaufdämpfers.

Die Anordnung des Reibungsbelags gemäß Anspruch 2 ermöglicht eine unmittelbare Reibungsdämpfung bei einer Axialverlagerung des Stößels gegenüber dem Gehäuse. Der Reibungsbelag kann an einer Innenseite und/oder einer Außenseite des Kolbens angeordnet sein. Der Kolben ist insbesondere hülsenförmig ausgeführt und kann eine Innen- und/oder Außennut zur Aufnahme des Reibungsbelags aufweisen. Der Reibungsbelag ist insbesondere ringförmig ausgeführt und kann stirnseitig mindestens einen Vorsprung aufweisen.

Ein Schaltaktuator gemäß Anspruch 3 gewährleistet ein unmittelbares Schalten zwischen der Blockadeanordnung und Freilaufanordnung. Er weist insbesondere einen Schaltantrieb und ein Stellelement auf.

Die Ausführung des Stellelements gemäß Anspruch 4 ermöglicht eine vorteilhafte Schaltbewegung des Stellelements. Eine Drehung des Stellelements um die Längsachse ermöglicht das Schalten zwischen der Blockadeanordnung und der Freilaufanordnung. Das Stellelement kann platzsparend vorteilhaft in den Dämpfer integriert sein.

Eine Ausführung des Schaltantriebs gemäß Anspruch 5 ist unkompliziert. Insbesondere ermöglicht der schaltbare Hubmagnet eine Linearbewegung entlang der Längsachse des Dämpfers, die insbesondere mittels eines Kraftübertragungselements und eines drehbaren Stellrings in eine Drehbewegung um die Längsachse gewandelt wird. Insbesondere ist der Stellring bezüglich einer Drehung um die Längsachse fest mit dem Stellelement des Schaltantriebs verbunden.

Eine Ausführung des Kraftübertragungselements gemäß Anspruch 6 ermöglicht eine unmittelbare und unkomplizierte Wandlung der axialen Stellbewegung des Magneten in die Drehbewegung für das Stellelement.

Eine Sicherheitseinheit gemäß Anspruch 7 gewährleistet eine Betätigung, also ein Schalten, der Schalteinheit auch in einem Notfallzustand, insbesondere bei der Unterbrechung der elektrischen Stromversorgung. Die Sicherheitseinheit weist insbesondere mindestens ein Energiespeicherelement und insbesondere mehrere Energiespeicherelemente auf. Ein erstes Energiespeicherelement kann als mechanisches Federelement ausgeführt sein und insbesondere zwischen dem Kraftübertragungselement und dem Stellring angeordnet sein. Ein zweites Energiespeicherelement kann als elektrischer Kondensator ausgeführt und mit dem Hubmagneten gekoppelt sein.

In einer alternativen Ausführung gemäß Anspruch 8 ist der Schaltantrieb als schaltbarer Motor ausgeführt. Der schaltbare Motor ist insbesondere ein Elektromotor, dessen Drehachse parallel zur Längsachse des Dämpfers orientiert ist. An der Abtriebswelle des Motors ist ein Drehmomentübertragungselement in Form eines Zahnrads oder Ritzels angeordnet, dass insbesondere in eine korrespondierende Außenverzahnung am Stellelement eingreifen kann. Eine Umwandlung der Antriebsbewegung in die Stellbewegung ist entbehrlich. Die Übertragung der Antriebsbewegung auf das Stellelement erfolgt unmittelbar.

In einer weiteren alternativen Ausgestaltung gemäß Anspruch 9 ist der Schaltantrieb als schaltbarer Drehmagnet ausgeführt. Das Stellelement kann unmittelbar mit dem Drehmagneten gekoppelt sein. Der Drehmagnet ist insbesondere als Tauchspule ausgeführt, die auch als Voice Coil-Aktuatoren bekannt sind. Der Drehmagnet umfasst eine Spule auf einem Träger, insbesondere aus Kunststoff, sowie einen Zylinder mit mindestens einem Permanentmagneten. Die Kraft und Richtung der aktiven, also bewegten, Komponente sind direkt abhängig von der Richtung und der Stärke des elektrischen Schaltstromes durch die Spule nach dem Prinzip der Lorentz-Kraft. Die Tauchspule kann mit oder ohne Gehäuse ausgeführt sein.

Eine Ausführung des Stellelements gemäß Anspruch 10 ermöglicht ein unmittelbares Zusammenwirken des Stellelements mit dem Kolben, insbesondere für den Fall, dass der Reibungsbelag an der Innenseite des Kolbens angeordnet ist.

Eine Ausführung des Dämpfers gemäß Anspruch 11 ermöglicht ein zuverlässiges und unmittelbares Schalten. Dazu sind ein Formelement und ein Gegenformelement vorgesehen, die in der Blockadeanordnung in Eingriff bringbar sind. Der schaltbare Dämpfer ermöglicht die Blockade der Bewegung des Kolbens mit dem Reibungsbelag durch Formschluss. Die Blockadeanordnung ist unkompliziert realisierbar. In der Blockadeanordnung ist das Formelement an dem Gegenformelement zuverlässig verriegelt.

Die Ausführung des Formelements und des Gegenformelements gemäß Anspruch 12 ermöglicht eine unkomplizierte Realisierung der Blockadeanordnung. Die Formkulisse kann mehrere Gegenformelemente aufweisen, wobei das Formelement zuverlässig in eines der Gegenformelemente eingreifen kann. Das Schalten von der Freilaufanordnung in die Blockanordnung ist für verschiedene Positionen des Kolbens entlang der Längsachse im Dämpfer möglich.

Eine Ausführung des Dämpfers gemäß Anspruch 13 ermöglicht ein unmittelbares Blockieren des Kolbens. Das Gegenformelement ist einteilig am Kolben angeordnet, insbesondere an der Außenseite des Kolbens. Das Gegenformelement kann als erhabene Struktur, beispielsweise als Formkulisse, aber auch als Vertiefung oder Ausnehmung am Kolben ausgeführt sein.

Eine Ausführung des Dämpfers gemäß Anspruch 14 mit dem Formelement am Gehäuse vereinfacht die Schaltung des Dämpfers. Insbesondere ist das Formelement an einer Innenseite des Gehäuses angeordnet. Es ist alternativ möglich, wenn das Gegenformelement an der Innenseite des Kolbens angeordnet ist, dass Formelement an einer Außenseite des Stellelements vorzusehen. In diesem Fall ist das Stellelement in radialer Richtung bezogen auf die Längsachse des Dämpfers zwischen dem Stößel und dem Kolben angeordnet.

Ein schaltbarer Dämpfer gemäß Anspruch 15 weist eine verbesserte Funktionalität auf.

Weitere vorteilhafte Ausgestaltungen, zusätzliche Merkmale und Einzelheiten der Erfindung ergeben sich aus der nachfolgenden Beschreibung von drei Ausführungsbeispielen anhand der Zeichnung. Es zeigen:
- Fig. 1: eine perspektivische Darstellung eines erfindungsgemäßen schaltbaren Dämpfers gemäß einem ersten Ausführungsbeispiels,
- Fig. 2: einen Längsschnitt gemäß der Schnittlinie II-II in Fig. 1,
- Fig. 3: eine perspektivische Darstellung des Stellelements des Dämpfers in Fig. 1 und 2,
- Fig. 4: eine perspektivische Darstellung des Kolbens des Dämpfers gemäß Fig. 1 und 2,
- Fig. 5: eine teilgeschnittene perspektivische Darstellung des Kolbens und des Stellelements in einem Blockadeanordnung,
- Fig. 6: eine perspektivische Darstellung eines Schaltaktuators des Dämpfers gemäß Fig. 1 und 2,
- Fig. 7: eine teilweise freigeschnittene perspektivische Darstellung des Dämpfers gemäß Fig. 1 in der Blockadeanordnung,
- Fig. 8: eine Fig. 7 entsprechende Darstellung des Dämpfers im Freilaufzustand,
- Fig. 9: eine Fig. 1 entsprechende Darstellung eines Dämpfers gemäß einem zweiten Ausführungsbeispiel,
- Fig. 10: eine perspektivische Darstellung des Schaltaktuators des Dämpfers gemäß Fig. 9,
- Fig. 11: eine Fig. 1 entsprechende Darstellung eines Dämpfers gemäß einem dritten Ausführungsbeispiel und
- Fig. 12: eine perspektivische Darstellung des Schaltaktuators des Dämpfers in Fig. 11.

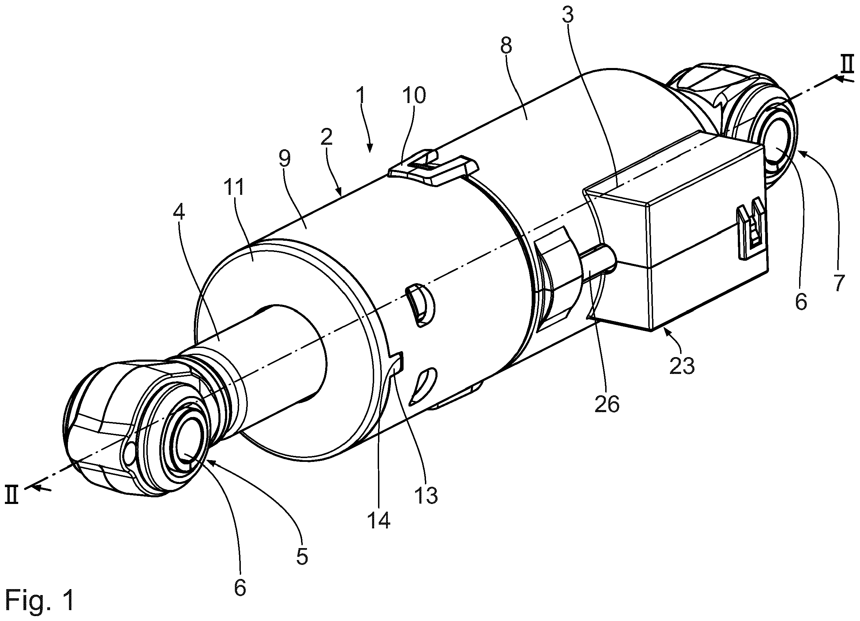

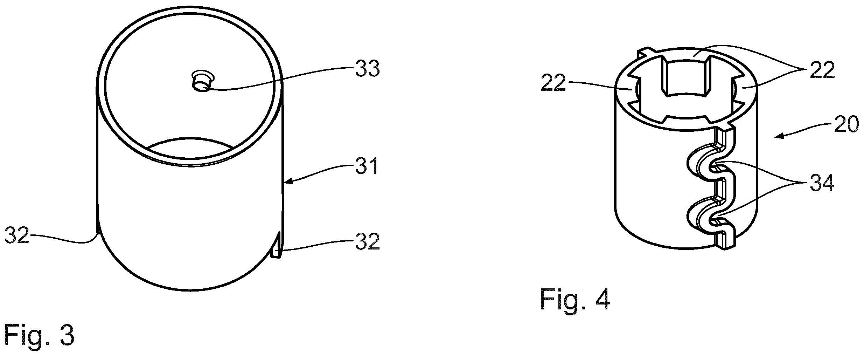

Ein in Fig. 1 bis 8 als Ganzes mit 1 bezeichneter schaltbarer Dämpfer kann in einer Waschmaschine eingesetzt werden, um eine Umwucht der Waschtrommel zu dämpfen.

Der Dämpfer 1 umfasst ein im Wesentlichen zylindrisches Gehäuse 2 mit einer Längsachse 3. Konzentrisch zur Längsachse 3 ist ein im Wesentlichen rohrförmiger Stößel 4 angeordnet, der entlang der Längsachse 3 relativ zu dem Gehäuse 2 verlagerbar ist. Der Stößel 4 kann auch einen Vollquerschnitt aufweisen. Der Stößel 4 ist mit einem ersten Ende innerhalb des Gehäuses 2 angeordnet und mit einem zweiten Ende aus dem Gehäuse 2 herausgeführt. An dem zweiten, dem Gehäuse 2 abgewandten Ende weist der Stößel 4 ein Stößel-Befestigungselement 5 auf. Das Stößel-Befestigungselement 5 weist eine Durchgangshülse 6 auf, deren Hülsen-Achse senkrecht zur Längsachse 3 orientiert ist.

An einem dem Stößel-Befestigungselement 5 gegenüberliegendem Ende des Dämpfers 1 weist das Gehäuse ein Gehäuse-Befestigungselement 7 auf, das im Wesentlichen identisch zu dem Stößel-Befestigungselement 5 ausgeführt ist und eine Hülse 6 aufweist. Das Stößel-Befestigungselement 5 ist fest mit dem Stößel 4 verbunden. Das Gehäuse-Befestigungselement 7 ist fest mit dem Gehäuse 2 verbunden. Das Gehäuse-Befestigungselement 7 ist insbesondere an einem stirnseitigen Ende eines Führungsabschnitts 19 des Gehäuses 2 befestigt.

Mit den Befestigungselementen 5, 7 wird der Dämpfer 1 in der Waschmaschine, insbesondere zwischen deren Gestell und der Waschtrommel, angeordnet, um eine Bewegung der Waschtrommel, insbesondere in Folge einer Unwucht beim Drehen, gegenüber dem Gestell zu Dämpfen.

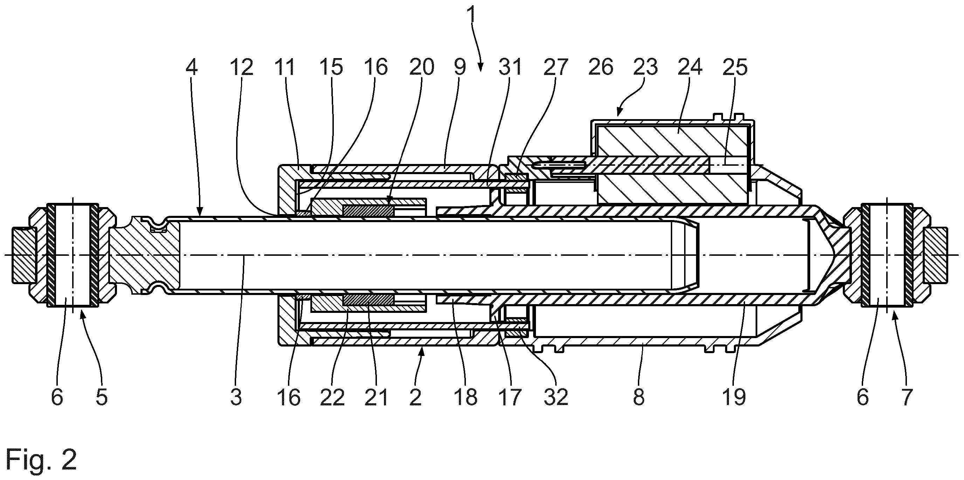

Das Gehäuse 2 ist mehrteilig ausgeführt und umfasst einen in Fig. 2 rechts dargestellten Schalt-Gehäuseteil 8 und einen damit lösbar verbundenen Reibungsdämpfungs-Gehäuseteil 9. Entlang der Längsachse 3 sind der Schalt-Gehäuseteil 8 und der Reibungsdämpfungs-Gehäuseteil 9 hintereinander angeordnet. An der dem Gehäuse-Befestigungselement 7 gegenüberliegenden Stirnseite ist das Schalt-Gehäuseteil 8 mit dem Reibungsdämpfungs-Gehäuseteil 9 verbunden. Die Verbindung kann durch miteinander korrespondierende Rastelemente 10 erfolgen.

An dem dem Stößel-Befestigungselement 5 zugewandten Ende des Gehäuses 2 ist das Reibungsdämpfungs-Gehäuseteil 9 mittels einer FührungsKappe 11 verschlossen. Die Führungs- Kappe 11 weist eine zentrale Führungsöffnung 12 auf, durch die der Stößel 4 hindurch in einen Innenraum des Gehäuses 4 geführt ist. Die Führungs- Kappe 11 weist mindestens einen, sich entlang der Längsachse 3 erstreckenden Positioniersteg 13 auf, der in eine dafür vorgesehene Ausnehmung 14 am Gehäuse 2, insbesondere des Reibungsdämpfungs-Gehäuseteils 9 eingreift. Durch den Positioniersteg 13 ist die Drehposition der Führungs- Kappe 11 gegenüber dem Gehäuse 2 eindeutig festgelegt. Der Positioniersteg 13 dient zudem als Verdrehschutz für die Führungs- Kappe 11 gegenüber dem Gehäuse 2 um die Längsachse 3.

An einer Innenseite der Stirnfläche 15 sind vier Kappen-Freilaufanschläge 16 einteilig an der Führungs- Kappe 11 angeformt. Die Kappen-Freilaufanschläge 16 sind parallel zur Längsachse 2 orientiert und in einer Ebene senkrecht zur Längsachse 3 kreissegmentförmig um den Stößel 4 herum angeordnet. Die Führungs- Kappe 11 ist insbesondere aus einem elastischen Material, insbesondere aus Kunststoff, hergestellt. Es können auch mehr oder weniger als vier Kappen-Freilaufanschläge 16 vorgesehen sein. Die Kappen-Freilaufanschläge 16 sind in einer tangentialen Richtung bezüglich der Längsachse 3 beabstandet, insbesondere gleich beabstandet, zueinander angeordnet. Zwischen zwei benachbarten Kappen-Freilaufanschlägen 16 ist ein Freiraum vorgesehen.

An der der Führungs- Kappe 11 gegenüberliegenden Stirnseite des Reibungsdämpfungs-Gehäuseteils 9 ist ein Gehäuseboden 17 einteilig angeformt. Der Gehäuseboden 17 ist senkrecht zur Längsachse 3 orientiert. Ausgehend vom Gehäuseboden 17 erstrecken sich beispielsweise vier Boden-Freilaufanschläge 18 in Richtung der Führungs- Kappe 11. Die Boden-Freilaufanschläge 18 sind jeweils parallel zur Längsachse 3 orientiert und entsprechend den Kappen-Freilaufanschlägen 16 ausgeführt. An dem Gehäuseboden 17 den Boden-Freilaufanschlägen 18 abgewandt ist der Führungsabschnitt 19 einteilig angeformt. Der Führungsabschnitt 19 dient zur Führung des Stößels 4 bei einer Axialverlagerung innerhalb des Gehäuses 2. Der Innendurchmesser des Führungsabschnitts 19 entspricht im Wesentlichen der Außengeometrie des Stößels 4. An dem dem Stößel 4 gegenüberliegenden Ende ist an dem Führungsabschnitt 19 das Gehäuse-Befestigungselement 7 angeordnet. Der Führungsabschnitt 19 ist durch den Schalt-Gehäuseteil 8 hindurchgeführt und das Gehäuse-Befestigungselement 7 steht an dem rückwärtigen, in Fig. 1 und 2 rechts dargestellten Ende des Gehäuses 2 über.

In dem Gehäuse 2, insbesondere in dem Reibungsdämpfungs-Gehäuseteil 9 ist ein Kolben 20 angeordnet. Der Kolben 20 ist im Wesentlichen hohlzylindrisch ausgeführt. Der Kolben 20 ist entlang der Längsachse 3 im Gehäuse 2 und relativ zu dem Stößel 4 verlagerbar. Der Kolben 20 ist in radialer Richtung der Längsachse 3 zwischen dem Stößel 4 und dem Gehäuse 2 angeordnet.

Der Kolben 20 weist eine innere Ringnut 21 auf, in der ein Reibungsbelag 21 angeordnet ist. Durch den Kolben 20 ist der Reibungsbelag 21 geführt aufgenommen. Eine Bewegung des Kolbens 20 entlang der Längsachse 3 bewirkt eine Verlagerung des Reibungsbelags 21. Der Reibungsbelang 21 ist insbesondere als Reibstreifen ausgeführt, dessen Stirnseiten eben oder uneben, beispielsweise gezackt oder gewellt oder in einer anderen Profilierung ausgeführt sein können. Der ringförmige Reibungsbelag 21 liegt mit einer innenzylindrischen Reibungsfläche an einer Außenseite des Stößels 4 an. Eine Relativbewegung zwischen dem Stößel 4 und dem Reibungsbelag 21 bewirkt eine der Bewegung entgegenwirkende Reibungskraft, also eine Reibungsdämpfung.

Die Innennut des Kolbens 20 ist in axialer Richtung beidseitig durch Führungsstege 22 begrenzt. Die Führungsstege 22 sind einstückig mit dem Kolben 20 ausgeführt. Gegenüber der Innennut ragen die Führungsstege 22 radial bezüglich der Längsachse 3 nach innen vor. Die Führungsstege 22 sind jeweils in einer Ebene senkrecht zur Längsachse 3 ringsegmentartig ausgeführt. Die von den Führungsstegen 22 definierte Innenkontur entspricht im Wesentlichen der Außenkontur des Stößels 4, wobei die Innenkontur im Bereich der Führungsstege 22 derart größer ist als die Außenkontur des Stößels 4, dass eine unmittelbare Kontaktieren des Stößels 4 durch den Kolben 20 ausgeschlossen ist.

Es sind jeweils vier Führungsstege 22 an den stirnseitigen Enden des Kolbens 20 vorgesehen. Die Führungsstege 22 sind bezüglich ihrer tangentialen Erstreckung um die Längsachse 3 derart ausgeführt, dass sie in die Zwischenräume zwischen den Kappen-Längsstegen 16 bzw. in die Zwischenräume zwischen den Boden-Längsstegen 18 eingreifen können. Gemäß der Darstellung des Dämpfers in Fig. 2 ist der Kolben 20 benachbart zu der Führungs- Kappe 11 angeordnet. Die Führungsstege 22, die der Führungs- Kappe 11 zugewandt sind, greifen in die Zwischenräume zwischen benachbarten Kappen-Längsstegen 16 ein. Dadurch ist eine unbeabsichtigte Verdrehung des Kolbens 20 gegenüber dem Gehäuse 2 ausgeschlossen. Bezüglich ihrer tangentialen Position sind die vier Kappen-Längsstege 16 gegenüber den Boden-Längsstegen 18 um 45° gedreht angeordnet. Durch die Zwischenräume zwischen zwei Führungsstegen 22 liegt der Reibungsbelag 21 in dem Kolben 20 in axialer Richtung der Längsachse 3 zumindest bereichsweise frei. Dieser freiliegende Bereich des Reibungsbelags 21 kann stirnseitig gegen die Kappen-Längsstege 16 oder Boden-Längsstege 18 anschlagen. Der Reibungsbelag 21 dient als Anschlagpuffer.

Der Dämpfer 1 weist ferner eine Schalteinheit 23 auf, die ein Schalten zwischen einer Blockadeanordnung und einer Freilaufanordnung des Kolbens 20 ermöglicht. Die Schalteinheit 23 umfasst einen Schaltaktuator 28 mit einem Schaltantrieb 24. Gemäß dem gezeigten Ausführungsbeispiel ist der Schaltantrieb 24 als Hubmagnet ausgeführt, der eine lineare Hubbewegung, durch elektrisches Schalten ausgelöst, verursacht.

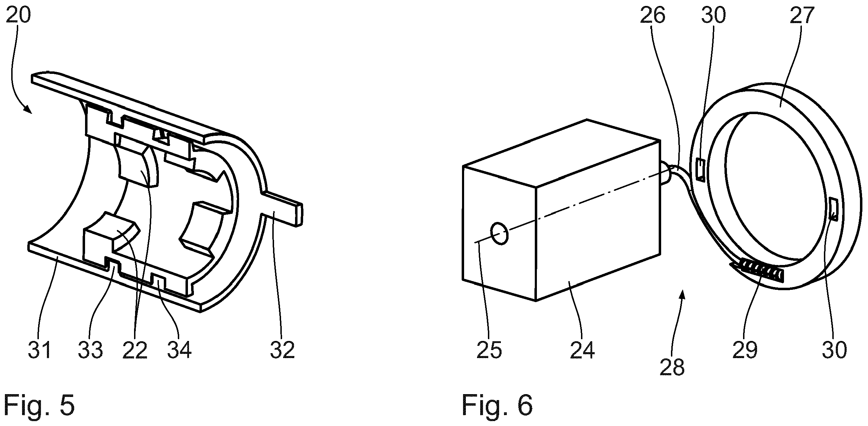

Der Hubmagnet ist derart am Gehäuse 2 des Dämpfers 1 angebracht, dass die lineare Hubachse 25 parallel zur Längsachse 3 des Dämpfers orientiert ist. In dem Bereich des Schalt-Gehäuseteils 8, in dem der Hubmagnet angeordnet ist, ist das Gehäuse 2 unrund, also von einer Zylinderform abweichend ausgeführt. Der Hubmagnet ist über ein Kraftübertragungselement 26 mit einem Stellring 27 verbunden. Der Schaltantrieb 24 als schaltbarer Hubmagnet, das Kraftübertragungselement 26 und der Stellring 27 bilden den Schaltaktuator 28, der in Fig. 6 dargestellt ist. Das Kraftübertragungselement 26 ist als flexibler Draht ausgeführt, der insbesondere entlang eines starren Führungskanals geführt ist. Das Kraftübertragungselement greift insbesondere im Wesentlichen radial am Stellring 27 an und ist dort mittels eines Energiespeicherelements in Form eines Federelements 29 gegen eine Federkraft verlagerbar. Der Stellring 27 weist zwei exzentrisch zur Längsachse 3 angeordnete Öffnungen 30 auf, in die ein hülsenförmiges Stellelement 31 mit stirnseitigen Eingreifstegen 32 eingreift. Das Stellelement 31 ist Bestandteil der Schalteinheit 23. Die Schalteinheit 23, insbesondere in Form des Stellelements 31, ermöglicht ein formschlüssiges Verbinden mit dem Kolben 20 in der Blockadeanordnung und ein Freigeben des Kolbens 20 in der Freilaufanordnung. Dazu weist das Stellelement 31 an einer Innenseite der inneren Zylindermantelfläche einen Radialzapfen als Formelement 33 auf, der in einem Gegenformelement 32 an einer Formkulisse eingreifen kann. Die Gegenformelemente 32 sind an einer Außenseite des im Wesentlichen zylindrisch ausgeführten Kolbens 20 einteilig angeformt. Gemäß dem gezeigten Ausführungsbeispiel sind an dem Kolben 20 zwei Formkulissen vorgesehen, wobei jede Formkulisse zwei Gegenformelemente 34 aufweist. Die Gegenformelemente 34 sind jeweils im Wesentlichen u-förmig ausgeführt, wobei die parallelen Schenkel des U sich in Umfangsrichtung um die Längsachse 3 im eingebauten Zustand des Kolbens 20 erstrecken. Die Formkulissen sind bezüglich der Längsachse 3 diametral gegenüberliegend an der Außenseite des Kolbens 20 angeordnet. Die jeweilige Öffnung des U ist in Umfangsrichtung um die Längsachse 3 orientiert.

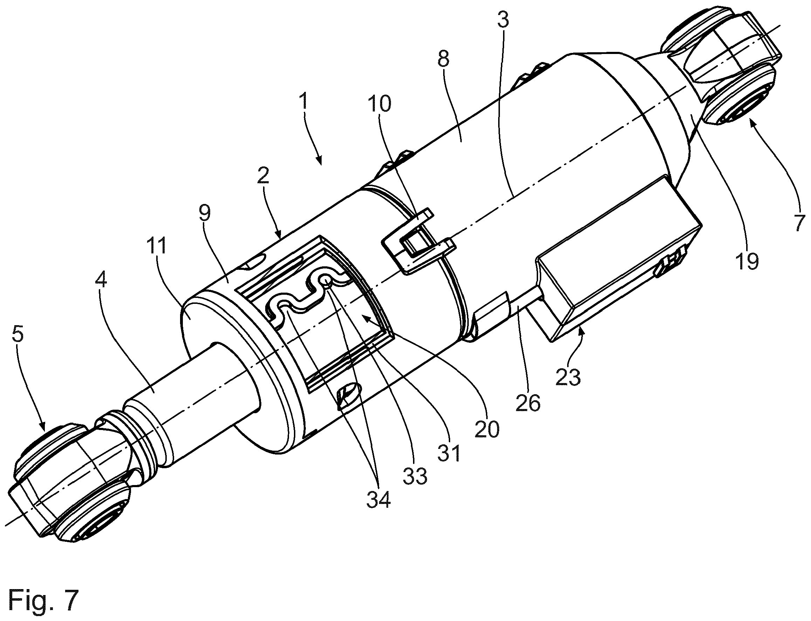

Nachfolgend wird die Funktion des Reibungsdämpfers 1 näher erläutert. Gemäß der Anordnung des Stellelements 31, wie in Fig. 7 gezeigt, befindet sich der Dämpfer 1 in der Blockadeanordnung. In der Blockadeanordnung liegt das Formelement 33 in einem der Gegenformelemente 34. Die parallelen Schenkel des U der Gegenformelemente 34 bilden einen Hinterschnitt in einer Richtung parallel zur Längsachse 3. Eine Verlagerung des Kolbens 20 relativ zum Gehäuse 2 und/oder dem Stößel 4 ist blockiert. Eine Relativverlagerung des Stößels 4 gegenüber dem Gehäuse 2 bewirkt eine Reibungskraft durch den am Stößel 4 radial anliegenden und axial blockierten Reibungsbelag 21. In dieser Anordnung ist die Reibungsdämpfungsfunktion des Dämpfers 1 eingeschaltet, also aktiviert.

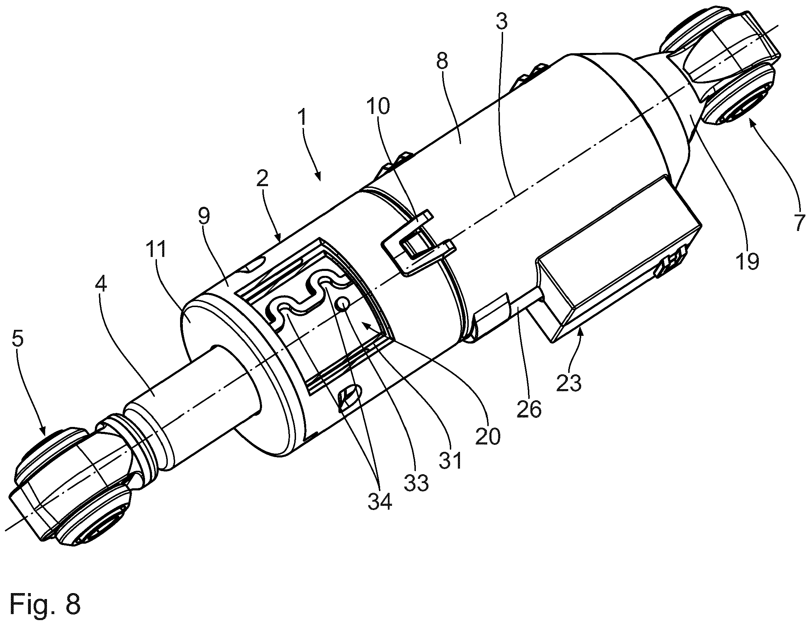

Um den Dämpfer 1 in die Freilaufanordnung zu schalten, wird die Schalteinheit 23 aktiviert, indem der Schaltaktuator 28 betätigt wird. Durch ein Schalten des Hubmagneten 24 wird das Kraftübertragungselement 26, dass am Hubmagneten 24 angreift, entlang der Hubachse 25 verlagert. Das Kraftübertragungselement 26 wird entlang des gebogenen Führungskanals radial dem Stellring 27 zugeführt. Das Kraftübertragungselement 26 übt ein Drehmoment auf den Stellring 27 um die Längsachse 3 aus und bewirkt eine Drehung des Stellrings 27 um die Längsachse 3. Gemeinsam mit dem Stellring 27 wird das Stellelement 31 gedreht, dass mit den Eingreifstegen 32 in den Öffnungen 30 des Stellrings 27 gehalten ist. Durch die Drehung des Stellelements 31 wird das Formelement 33 gegenüber dem Kolben 20, dem Stößel 4 und dem Gehäuse 2 um die Längsachse 3 gedreht. Das Formelement 33 wird aus dem Gegenformelement 34 heraus verlagert. Die Freilaufanordnung des Dämpfers ist in Fig. 8 gezeigt. Das Formelement 33 ist in der Freilaufanordnung von dem Gegenformelement 34 in Umfangsrichtung, also in tangentialer Richtung, bezüglich der Längsachse 3 beabstandet angeordnet. Der Kolben 20 ist von dem Stellelement 31 freigegeben. In der Freilaufanordnung ist der Kolben 20 entlang der Längsachse 3 gegenüber dem Gehäuse 2 und gegenüber dem Stößel 4 verlagerbar.

Für die Überführung des Dämpfers 1 zurück in die Blockadeanordnung wird der Hubmagnet 24 in entsprechend entgegengesetzter Richtung geschaltet und damit das Stellelement 31 in entgegengesetzter Richtung um die Längsachse 3 gedreht.

Das Federelement 29 ist Teil einer Sicherheitseinrichtung, die im Fall eines Stromausfalls eine nochmalige Schaltung der Schalteinheit 23 ermöglicht. Dazu ist ein nicht dargestellter Kondensator vorgesehen, der elektrische Energie speichern kann, die im Fall der Unterbrechung einer Stromversorgung ausreichend ist, um den Hubmagneten 24 zu schalten. Die Bewegung des Hubmagneten 24 wird in dem Federelement 29 mechanisch gespeichert.

Die beiden Gegenformelemente 34 einer Formkulisse sind entlang der Längsachse 3 beabstandet zueinander angeordnet. Dadurch ist es möglich, dass der Kolben 20 in verschiedenen Positionen mittels Stellelement 31 und dessen Formelement 33 entlang der Längsachse 3 blockierbar ist. Insbesondere können entlang der Drehrichtung des Stellelements 31 Einführschrägen an den Gegenformelement 34 vorgesehen sein, um ein Einführen des Formelements 33 in das Gegenformelement 34 bei unpräziser Anordnung, also bei nicht exakt fluchtender Anordnung, des Formelements 33 gegenüber dem Gegenformelement 34 zu vereinfachen.

Es sind auch andere Ausgestaltungen für das Formelement 33 und das Gegenformelement 34 denkbar. Gemäß einer nicht gezeigten Ausführungsform kann das Formelement beispielsweise keilförmig ausgeführt sein, dass mit einer Keilspitze in eine von mehreren, insbesondere vielen, der Keilspitze korrespondieren ausgeführten zackenartigen Ausnehmungen an einer Formkulisse verriegelt eingreifen kann. An der Formkulisse können insbesondere mindestens fünf, insbesondere mindestens 10 und insbesondere mindestens 20 entsprechende Ausnehmungen, in die die Keilspitze eingreifen kann, vorgesehen sein. Dadurch ist es möglich, dass das Formelement im Wesentlichen unabhängig von der Axialpositionierung des Kolbens 20 in eines der Gegenformelemente eingreifen kann.

Der Reibungsbelag 21 kann auch an einer Außenseite des Kolbens 20 angeordnet sein. In diesem Fall ist das Gegenformelement an einer Innenseite des Kolbens 20 ausgeführt. Das Formelement wäre dann zwischen dem Stößel 4 und dem Kolben 20 angeordnet.

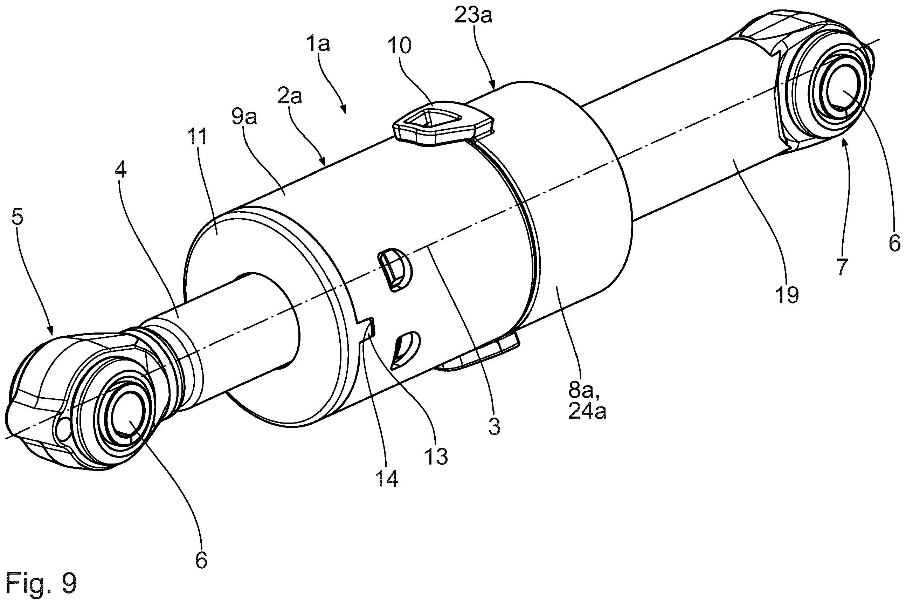

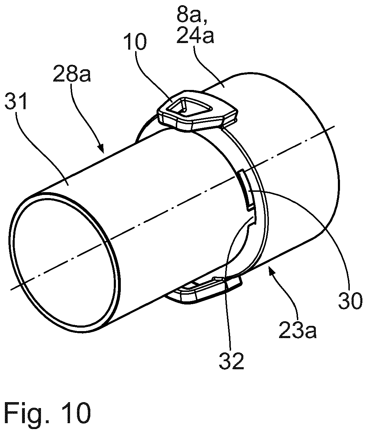

Im Folgenden wird unter Bezugnahme auf Fig. 9 und 10 ein zweites Ausführungsbeispiel der Erfindung beschrieben. Konstruktiv identische Teile erhalten dieselben Bezugszeichen wie im ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Der wesentliche Unterschied gegenüber dem ersten Ausführungsbeispiel besteht in der Ausgestaltung der Schalteinheit 23a. Die Schalteinheit 23a, insbesondere der Schaltaktuator 28a, weist als Schaltantrieb 24a einen schaltbaren Drehmagneten auf, der auch als Tauchspule oder Voice Coil bekannt ist. Der Drehmagnet ermöglicht eine Rotationsbewegung einer aktiven Komponente gegenüber einer statischen, passiven Komponente. Die aktive Komponente des Drehmagneten ist über die Eingreifstege 32 des Stellelements 31 in der vorstehend erläuterten Weise drehfest gekoppelt. Dadurch, dass der Drehmagnet 24a konzentrisch zur Längsachse 3 angeordnet ist, ist das Gehäuse 2a, insbesondere der Schalt-Gehäuseteil 8a im Wesentlichen zylindrisch ausgeführt. Die Baugröße des Gehäuses 2a, insbesondere die Gehäuselänge entlang der Längsachse 3 des Schalt-Gehäuseteils 8a ist reduziert. Der Dämpfer 1a weist eine besonders kompakte Bauform auf.

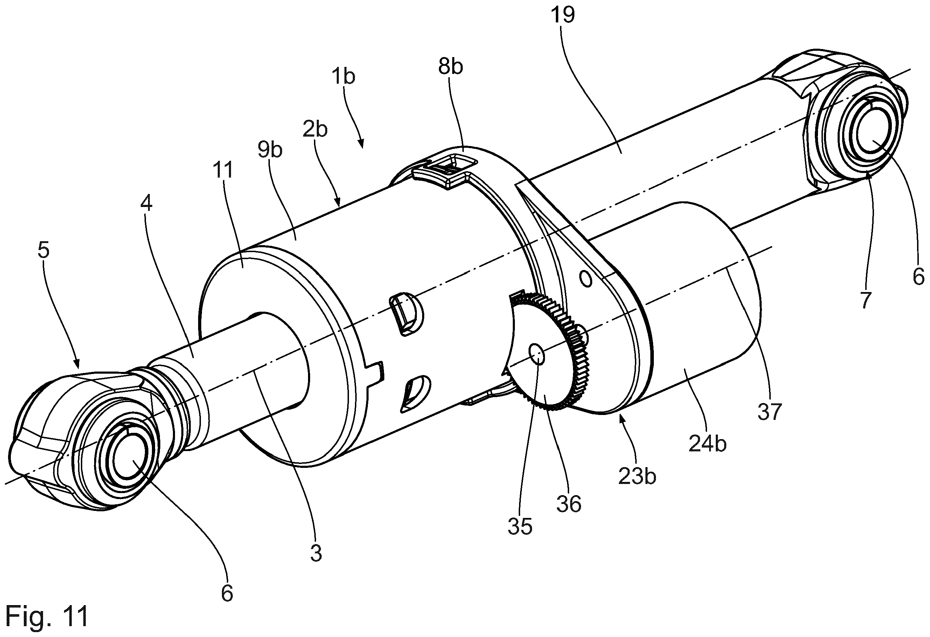

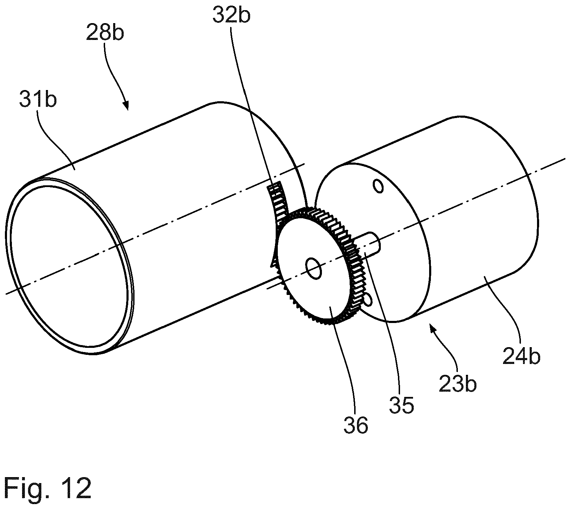

Im Folgenden wird unter Bezugnahme auf Fig. 11 und 12 ein drittes Ausführungsbeispiel der Erfindung beschrieben. Konstruktiv identische Teile erhalten dieselben Bezugszeichen wie bei den beiden ersten Ausführungsbeispielen, auf deren Beschreibungen hiermit verwiesen wird. Konstruktiv unterschiedliche, jedoch funktionell gleichartige Teile erhalten dieselben Bezugszeichen mit einem nachgestellten b.

Der wesentliche Unterschied gegenüber den vorherigen Ausführungsbeispielen besteht bei dem Dämpfer 1b in der Ausgestaltung der Schalteinheit 23b, die als Schaltantrieb 24b einen schaltbaren Motor beispielsweise in Form eines Elektromotors aufweist. An der Abtriebswelle 35 des Elektromotors 23b ist ein Zahnrad 36 vorgesehen. Der Elektromotor 24b ist derart am Gehäuse 2b des Dämpfers 1b angeordnet, dass die Drehachse 37 des Elektromotors 24b parallel zur Längsachse 3 und beabstandet zur Längsachse 3 angeordnet ist. Das Zahnrad 36 greift mit seiner Außenverzahnung in eine korrespondierende Außenverzahnung 32b am Stellelement 31b ein. Die Außenverzahnung 32b entspricht den Eingreifstegen an den Stellelementen gemäß den vorherigen Ausführungsbeispielen. Die Eingreifstege 32 und die Außenverzahnung 32b sind also Drehmomentübertragungsmittel, um das von dem Schaltaktuator 28, 28a, 28b verursachte Schalt-Drehmoment auf das hülsenförmige Stellelement 31, 31b zu übertragen und eine Drehung des Stellelements 31, 31b um die Längsachse 3 des Gehäuses 2 zu verursachen.

## Patentansprüche

1. Schaltbarer Dämpfer (1; 1a; 1b) umfassend
a. ein eine Längsachse (3) aufweisendes Gehäuse (2; 2a; 2b),
b. einen entlang der Längsachse (3) verlagerbaren Stößel (4),
c. einen zwischen dem Gehäuse (2; 2a; 2b) und dem Stößel (4) angeordneten Kolben (20),
d. einen am Kolben (20) angeordneten Reibungsbelag (21),
e. eine Schalteinheit (23; 23a; 23b), die zwischen einer Blockadeanordnung, in der der Kolben (20) bezüglich einer Verlagerung entlang der Längsachse (3) blockiert ist, und einer Freilaufanordnung, in der der Kolben (20) bezüglich einer Verlagerung entlang der Längsachse (3) freigegeben ist, schaltbar ist,
**dadurch gekennzeichnet, dass**
f. ein freiliegender Bereich des Reibungsbelags (21) stirnseitig gegen Kappen-Längsstege (16) oder Boden-Längsstege (18) anschlagen kann, sodass der Reibungsbelag (21) als Anschlagpuffer dient.

2. Schaltbarer Dämpfer gemäß Anspruch 1, **dadurch gekennzeichnet, dass** der Reibungsbelag (21) radial zur Längsachse (3) insbesondere zwischen dem Stößel (4) und dem Kolben (20) und/oder zwischen dem Kolben (20) und dem Gehäuse (2; 2a; 2b) angeordnet ist.

3. Schaltbarer Dämpfer gemäß einem der vorstehenden Ansprüche, **dadurch gekennzeichnet, dass** die Schalteinheit (23; 23a; 23b) einen Schaltaktuator (28; 28a 28b) zum Schalten zwischen der Blockadeanordnung und der Freilaufanordnung aufweist, wobei der Schaltaktuator (28; 28a 28b) insbesondere einen Schaltantrieb (24; 24a; 24b) und ein Stellelement (31; 31b) aufweist.

4. Schaltbarer Dämpfer gemäß Anspruch 3, **dadurch gekennzeichnet, dass** das Stellelement (31; 31b) konzentrisch zur Längsachse (3) angeordnet ist, wobei eine Betätigung des Schaltantriebs (24; 24a; 24b) eine Drehbewegung des Stellelements (31; 31b) um die Längsachse (3) bewirkt.

5. Schaltbarer Dämpfer gemäß Anspruch 3 oder 4, **dadurch gekennzeichnet, dass** der Schaltantrieb als schaltbarer Hubmagnet (24) ausgeführt ist, der insbesondere über Kraftübertragungselement (26) mit einem drehbaren Stellring (27) verbunden ist, wobei das Kraftübertragungselement (26) insbesondere im Wesentlichen radial am Stellring (27) angelenkt ist.

6. Schaltbarer Dämpfer gemäß Anspruch 5, **dadurch gekennzeichnet, dass** das Kraftübertragungselement (26) flexibel ausgeführt ist und entlang eines, insbesondere starren, Führungskanals geführt verlagerbar ist.

7. Schaltbarer Dämpfer gemäß einem der Ansprüche 3 bis 6, **dadurch gekennzeichnet, dass** die Schalteinheit (24) eine Sicherheitseinheit aufweist, die insbesondere Energiespeicherelemente umfasst, insbesondere ein zwischen dem Kraftübertragungselement (26) und dem Stellring (27) angeordnetes Federelement (29) und/oder einen Kondensator im Hubmagnet.

8. Schaltbarer Dämpfer gemäß Anspruch 3 oder 4, **dadurch gekennzeichnet, dass** der Schaltantrieb als schaltbarer Motor, insbesondere Elektromotor (24a), ausgeführt ist, wobei das Stellelement (31) insbesondere mittels eines Zahnrades (36) antreibbar ist.

9. Schaltbarer Dämpfer gemäß Anspruch 3 oder 4, **dadurch gekennzeichnet, dass** der Schaltantrieb als schaltbarer Drehmagnet (24b) ausgeführt ist, wobei insbesondere das Stellelement (31b) unmittelbar mit dem Drehmagnet (24b) gekoppelt ist.

10. Schaltbarer Dämpfer gemäß einem der vorstehenden Ansprüche, **dadurch gekennzeichnet, dass** das Stellelement (31; 31b) hülsenförmig ausgeführt ist und insbesondere mindestens ein Drehmomentübertragungselement (32; 32b) aufweist.

11. Schaltbarer Dämpfer gemäß einem der vorstehenden Ansprüche, **dadurch gekennzeichnet, dass** die Schalteinheit (23; 23a; 23b) ein Formelement (33) aufweist, das mit einem Gegenformelement (34) in der Blockadeanordnung in Eingriff bringbar ist.

12. Schaltbarer Dämpfer gemäß Anspruch 11, **dadurch gekennzeichnet, dass** das Formelement (33) als Radialzapfen aufgeführt ist, der in das an einer Formkulisse ausgeführte Gegenformelement (34) eingreifen kann.

13. Schaltbarer Dämpfer gemäß Anspruch 11 oder 12, **dadurch gekennzeichnet, dass** das Gegenformelement (34) am Kolben (20), insbesondere an dessen Außenseite, angeordnet ist.

14. Schaltbarer Dämpfer gemäß einem der vorstehenden Ansprüche, **dadurch gekennzeichnet, dass** das Formelement (33) am Stellelement (31; 31b), insbesondere an dessen Innenseite, angeordnet ist.

15. Schaltbarer Dämpfer gemäß einem der vorstehenden Ansprüche, **gekennzeichnet durch** eine Anschlagdämpfungseinheit, die insbesondere mindestens ein entlang der Längsachse (3) vorstehendes Anschlagelement (16, 18) und ein damit zusammenwirkendes Dämpfungselement (21) aufweist, und/oder eine Verdrehsicherung (16, 18, 22) für den Kolben (21).

## Claims

1. Switchable damper (1; 1a; 1b) comprising
a. a housing (2; 2a; 2b) having a longitudinal axis (3),
b. a plunger (4) displaceable along the longitudinal axis (3),
c. a piston (20) arranged between the housing (2; 2a; 2b) and the plunger (4),
d. a friction lining (21) arranged on the piston (20),
e. a switching unit (23; 23a; 23b) which is switchable between a blocking arrangement, in which the piston (20) is blocked with respect to a displacement along the longitudinal axis (3), and a free-moving arrangement, in which the piston (20) is released with respect to a displacement along the longitudinal axis (3)
**characterized in that**
f. an exposed area of the friction lining (21) can abut, with end faces, against longitudinal cap ribs (16) or longitudinal base ribs (18) such that the friction lining (21) serves as a stop buffer.

2. Switchable damper according to claim 1, **characterised in that** the friction lining (21) is arranged radially to the longitudinal axis (3) in particular between the plunger (4) and the piston (20) and/or between the piston (20) and the housing (2; 2a; 2b).

3. Switchable damper according to any one of the preceding claims, **characterised in that** the switching unit (23; 23a; 23b) has a switching actuator (28; 28a 28b) to switch between the blocking arrangement and the free-moving arrangement, the switching actuator (28; 28a 28b) in particular having a switching drive (24; 24a; 24b) and an adjusting element (31; 31b).

4. Switchable damper according to claim 3, **characterised in that** the adjusting element (31; 31b) is arranged concentrically to the longitudinal axis (3), wherein activating the switching drive (24; 24a; 24b) causes the adjusting element (31; 31b) to rotate about the longitudinal axis (3).

5. Switchable damper according to claim 3 or 4, **characterised in that** the switching drive is designed as a switchable stroke magnet (24) which is in particular connected by means of a force transmission element (26) to a rotatable adjusting ring (27), the force transmission element (26) in particular being articulated to the adjusting ring (27) substantially radially.

6. Switchable damper according to claim 5, **characterised in that** the force transmission element (26) is designed to be flexible and is displaceable along an, in particular rigid, guide channel in a guided manner.

7. Switchable damper according to any one of claims 3 to 6, **characterised in that** the switching unit (24) has a safety unit which in particular comprises power storage elements configured in particular as a spring element (29) arranged between the force transmission element (26) and the adjusting ring (27) and/or a condenser in the stroke magnet.

8. Switchable damper according to claim 3 or 4, **characterised in that** the switching drive is a switchable motor, in particular an electric motor (24a), wherein the adjusting element (31) is in particular driveable by means of a gear wheel (36).

9. Switchable damper according to claim 3 or 4, **characterised in that** the switching drive is a switchable rotary magnet (24b), wherein in particular the adjusting element (31b) is coupled directly to the rotary magnet (24b).

10. Switchable damper according to any one of the preceding claims, **characterised in that** the adjusting element (31; 31b) has the shape of a sleeve and has in particular at least one torque transmission element (32; 32b).

11. Switchable damper according to any one of the preceding claims, **characterised in that** the switching unit (23; 23a; 23b) has a shaped element (33) which is engageable with a mating shaped element (34) in the blocking arrangement.

12. Switchable damper according to claim 11, **characterised in that** the shaped element (33) is a radial pin which is engageable in the mating shaped element (34) designed on a shaped gate.

13. Switchable damper according to claim 11 or 12, **characterised in that** the mating shaped element (34) is arranged on the piston (20), in particular on the outer side thereof.

14. Switchable damper according to any one of the preceding claims, **characterised in that** the shaped element (33) is arranged on the adjusting element (31; 31b), in particular on the inner side thereof.

15. Switchable damper according to any one of the preceding claims, **characterised by** an impact damping unit which has in particular at least one stop element (16, 18) projecting along the longitudinal axis (3) and a damping element (21) interacting with it and/or an anti-rotation device (16, 18, 22) for the piston (21).

## Revendications

1. Amortisseur commutable (1 ; 1a ; 1b) comprenant
a. un boîtier (2 ; 2a ; 2b) présentant un axe longitudinal (3),
b. un poussoir (4) déplaçable le long de l'axe longitudinal (3),
c. un piston (20) disposé entre le boîtier (2 ; 2a ; 2b) et le poussoir (4),
d. une garniture de friction (21) disposée sur le piston (20),
e. une unité de commutation (23 ; 23a ; 23b) commutable entre un dispositif de blocage dans lequel le piston (20) est bloqué pour un déplacement le long de l'axe longitudinal (3) et un dispositif à roue libre dans lequel le piston (20) est libéré pour un déplacement le long de l'axe longitudinal (3),
**caractérisé en ce**
f. **qu'**une zone exposée de la garniture de friction (21) peut venir en butée frontalement contre des nervures longitudinales de chapeau (16) ou des nervures longitudinales de plancher (18), de sorte que la garniture de friction (21) serve de tampon de butée.

2. Amortisseur commutable selon la revendication 1, **caractérisé en ce que** la garniture de friction (21) est disposée radialement par rapport à l'axe longitudinal (3), en particulier entre le poussoir (4) et le piston (20) et/ou entre le piston (20) et le boîtier (2 ; 2a ; 2b).

3. Amortisseur commutable selon l'une des revendications précédentes, **caractérisé en ce que** l'unité de commutation (23 ; 23a ; 23b) présente un actionneur de commutation (28 ; 28a ; 28b) pour la commutation entre le dispositif de blocage et le dispositif de roue libre, l'actionneur de commutation (28 ; 28a ; 28b) présentant en particulier un entraînement de commutation (24 ; 24a ; 24b) et un élément d'actionnement (31 ; 31b).

4. Amortisseur commutable selon la revendication 3, **caractérisé en ce que** l'élément d'actionnement (31 ; 31b) est disposé de manière concentrique par rapport à l'axe longitudinal (3), un actionnement de l'entraînement de commutation (24 ; 24a ; 24b) provoquant un mouvement rotatif de l'élément d'actionnement (31 ; 31b) autour de l'axe longitudinal (3).

5. Amortisseur commutable selon la revendication 3 ou 4, **caractérisé en ce que** l'entraînement de commutation est conçu sous la forme d'un aimant de levage commutable (24) qui est relié en particulier par l'intermédiaire d'un élément de transmission de puissance (26) à une bague de réglage rotative (27), l'élément de transmission de puissance (26) étant articulé en particulier de manière sensiblement radiale sur la bague de réglage (27).

6. Amortisseur commutable selon la revendication 5, **caractérisé en ce que** l'élément de transmission de puissance (26) est de construction flexible et peut être déplacé de manière guidée le long d'un canal de guidage, en particulier un canal de guidage rigide.

7. Amortisseur commutable selon l'une des revendications 3 à 6, **caractérisé en ce que** l'unité de commutation (24) présente une unité de sécurité qui comprend en particulier des éléments de stockage d'énergie, notamment un élément élastique (29) disposé entre l'élément de transmission de puissance (26) et la bague de réglage (27) et/ou un condensateur dans l'aimant de levage.

8. Amortisseur commutable selon la revendication 3 ou 4, **caractérisé en ce que** l'entraînement de commutation est conçu sous la forme d'un moteur commutable, en particulier un moteur électrique (24a), l'élément d'actionnement (31) pouvant être entraîné notamment au moyen d'une roue dentée (36).

9. Amortisseur commutable selon la revendication 3 ou 4, **caractérisé en ce que** l'entraînement de commutation est conçu sous la forme d'un aimant rotatif commutable (24b), l'élément d'actionnement (31b) étant en particulier couplé directement à l'aimant rotatif (24b).

10. Amortisseur commutable selon l'une des revendications précédentes, **caractérisé en ce que** l'élément d'actionnement (31 ; 31b) est conçu sous la forme d'un manchon et présente en particulier au moins un élément de transmission de couple (32 ; 32b).

11. Amortisseur commutable selon l'une des revendications précédentes, **caractérisé en ce que** l'unité de commutation (23 ; 23a ; 23b) présente un élément de mise en forme (33) pouvant venir en prise avec un élément de contre-dépouille (34) dans le dispositif de blocage.

12. Amortisseur commutable selon la revendication 11, **caractérisé en ce que** l'élément de mise en forme (33) est conçu comme une broche radiale pouvant venir en prise avec l'élément de contre-dépouille (34) formé sur une porte de moule.

13. Amortisseur commutable selon la revendication 11 ou 12, **caractérisé en ce que** l'élément de contre-dépouille (34) est disposé sur le piston (20), en particulier sur son côté extérieur.

14. Amortisseur commutable selon l'une des revendications précédentes, **caractérisé en ce que** l'élément de mise en forme (33) est disposé sur l'élément d'actionnement (31 ; 31b), en particulier à l'intérieur de celui-ci.

15. Amortisseur commutable selon l'une des revendications précédentes, **caractérisé par** une unité d'amortissement de butée qui présente en particulier au moins un élément de butée (16, 18) faisant saillie le long de l'axe longitudinal (3) et un élément amortisseur (21) coopérant avec celui-ci, et/ou un dispositif anti-rotation (16, 18, 22) pour le piston (21).
